# EUROPÄISCHE PATENTSCHRIFT

(11) **EP 4 569 557 B1**
(45) Veröffentlichungstag und Bekanntmachung des Hinweises auf die Patenterteilung: **06.05.2026**
(21) Anmeldenummer: 23738698.2
(22) Anmeldetag: 04.07.2023
(51) Int. Cl.: H01M 8/04029, H01M 8/04089, H01M 8/04119, H01M 8/04291, H01M 8/04828, H01M 8/04701

(54) **BRENNSTOFFZELLENEINRICHTUNG FÜR EIN FAHRZEUG UND VERFAHREN ZUM BETREIBEN EINER BRENNSTOFFZELLENEINRICHTUNG FÜR EIN FAHRZEUG**
FUEL CELL DEVICE FOR A VEHICLE, AND METHOD FOR OPERATING A FUEL CELL DEVICE FOR A VEHICLE
DISPOSITIF DE PILE À COMBUSTIBLE POUR UN VÉHICULE ET PROCÉDÉ DE FONCTIONNEMENT D'UN DISPOSITIF DE PILE À COMBUSTIBLE POUR UN VÉHICULE

(30) Priorität: 12.08.2022 DE 102022208417
(43) Veröffentlichungstag der Anmeldung: 18.06.2025
(73) Patentinhaber: Robert Bosch GmbH, 70442 Stuttgart (DE)
(72) Erfinder: DEINERT, Matthias, 71726 Benningen Am Neckar (DE)
(86) Internationale Anmeldenummer: PCT/EP2023/068409
(87) Internationale Veröffentlichungsnummer: WO 2024/032983

(56) Entgegenhaltungen:
- DE-A1- 102020 212 178
- US-A- 5 366 818
- US-A- 6 117 577
- US-A1- 2022 093 943

## Beschreibung

Die vorliegende Erfindung betrifft eine Brennstoffzelleneinrichtung für ein Fahrzeug und ein Verfahren zum Betreiben einer Brennstoffzelleneinrichtung für ein Fahrzeug.

### Stand der Technik

In einem Brennstoffzellensystem wird im Anodenkreis der Wasserstoff aus dem Mitteldruckbereich der Brennstoffzelle zugeführt. Dabei wird typischerweise ein Regelventil zur bedarfsgerechten Dosierung des Wasserstoffes und eine Gebläsevorrichtung verwendet.

Ein Rezirkulationsgebläse, nachfolgend ARB (Anode Recirculation Blower) genannt, im Brennstoffzellensystem dient dazu, den unverbrauchten Wasserstoff, aus dem Auslass der Brennstoffzelle (Stack) wieder in den Zulauf zurückzuführen. Er ist Teil des Anodensubsystems bei dem in der Regel ein vorgelagerter Wasserabscheider integriert ist. Da der vorgelagerte Wasserabscheider das Prozesswasser meist nicht vollständig abscheiden kann, werden ARBs eingesetzt, die einen integrierten Wasserabscheider aufweisen.

Die Menge des Prozesswassers aus der Brennstoffzelle entsteht insbesondere im Betrieb mit hohen Stackleistungen oder hohen Stack-Strömen.

Damit ergeben sich niedrige Wassermengen am ARB-Einlass, wenn das Brennstoffzellensystem im niedrigen Last bzw. Teillastbereich arbeitet bzw. hohe im Vollastbereich. Die Last des ARBs in einem Brennstoffzellensystem, mit einer Kombination aus ARB und Saugstrahlpumpe im Rezirkulationspfad kann für niedrige Stack-Leistungen/Ströme am höchsten sein.

Wird eine hohe Leistung der Brennstoffzelle gefordert, wird genügend Wasserstoff aus dem Tanksystem entnommen, dass als Treibmenge für die Saugstrahlpumpe dient und diese dann die Rezirkulation des unverbrauchten Wasserstoffs übernimmt. In diesem Betriebsbereich braucht der ARB keine bzw. kaum Leistung aufbringen.

Beim Betrieb des ARBs entsteht Abwärme. Zur Kühlung des ARBs werden üblicherweise aktive Kühlkonzepte eingesetzt in dem z.B. das Gehäuse mit Kühlmittel durchströmt wird. Diese Art von Kühlkonzept erfordert jedoch einen erheblichen Mehraufwand in Form von zusätzlichen Kühlkanälen, Dichtstellen und Anschlussstutzen.

Wird der ARB mit freiem Prozesswasser durchströmt bzw. durch den integrierten Wasserabscheider abgeschieden, ergibt sich gegenüber einem wasserfreien Gasgemisch eine Kühlwirkung.

US6117577A beschreibt ein Brennstoffzellensystem mit einem Brennstoffzellenstapel, einem Wasserstoff-Rezirkulationspfad und einem Wasserabscheider, der auch als Wasserreservoir dient. Nach dem Stapel wird der Wasserstoff zunächst durch den Wasserabscheider und dann zur Wasserstoffpumpe geleitet.

DE102020212178A1 offenbart ein System, bei dem das aus dem Brennstoffzellenstapel austretende Anodengas zunächst einem Wasserabscheider zugeführt wird, bevor es rezirkuliert wird. Das abgeschiedene Wasser wird gesammelt und über ein Drainventil entfernt, während ein Gebläse und eine Saugstrahlpumpe die Rezirkulation und Mischung mit frischem Wasserstoff ermöglichen.

US5366818A zeigt ein Brennstoffzellensystem, bei dem der Ausgangsbrennstoffstrom zu einem Wasserabscheider geleitet wird, der Wasser kondensiert und Gas trennt. Das entfeuchtete Gas wird anschließend über einen Wasserstoffrückführkompressor rezirkuliert und durch einen Entionisierungsfilter gereinigt.

US2022093943A1 beschreibt ein Brennstoffzellensystem mit einer Fördereinheit, die ein Rezirkulationsgebläse, eine Strahlpumpe und ein Dosierventil umfasst. Wasser wird im Anodenkreislauf mithilfe eines Separators und/oder des Gebläses abgeschieden und über ein Ablassventil aus dem System entfernt.

### Offenbarung der Erfindung

Die vorliegende Erfindung schafft eine Brennstoffzelleneinrichtung für ein Fahrzeug nach Anspruch 1 und ein Verfahren zum Betreiben einer Brennstoffzelleneinrichtung für ein Fahrzeug nach Anspruch 9.

Bevorzugte Weiterbildungen sind Gegenstand der Unteransprüche.

### Vorteile der Erfindung

Die der vorliegenden Erfindung zugrunde liegende Idee besteht darin, eine Brennstoffzelleneinrichtung für ein Fahrzeug und ein Verfahren zum Betreiben einer Brennstoffzelleneinrichtung für ein Fahrzeug anzugeben, wobei eine Kühlung des Gebläses in der Rezirkulation durch das Prozesswasser aus der Brennstoffzelle verbessert werden kann.

Erfindungsgemäß umfasst die Brennstoffzelleneinrichtung für ein Fahrzeug eine Brennstoffzelle mit einer Anodenseite und einer Kathodenseite; eine Wasserstoffzufuhrleitung, welche mit der Anodenseite der Brennstoffzelle verbunden ist; eine Rezirkulationsleitung mit einer Gebläsevorrichtung, welche an der Anodenseite der Brennstoffzelle angebracht ist und mit der Anodenseite verbunden ist und dazu eingerichtet ist, einen Restgehalt an Wasserstoff in einem Wasserstoffrückfluss von der Anodenseite zu dieser zurück zu zirkulieren; einen Wasserabscheider, welcher mit der Rezirkulationsleitung verbunden ist und welcher dazu eingerichtet ist, Wasser aus dem Wasserstoffrückfluss von der Anodenseite herauszuleiten; ein Wasserreservoir, welches mit dem Wasserabscheider verbunden ist und dazu eingerichtet ist, das Wasser vom Wasserabscheider aufzunehmen; eine Dosiereinrichtung, welche mit dem Wasserreservoir und mit der Rezirkulationsleitung verbunden ist und dazu eingerichtet ist, eine vorbestimmte Wassermenge aus dem Wasserreservoir in die Rezirkulationsleitung und zur Gebläsevorrichtung einzubringen.

Es kann vorteilhaft in jedem Betriebsbereich der Brennstoffzelle ein Mindestfluss an Wasser zur Kühlung der Gebläsevorrichtung in die Rezirkulationsleitung eingebracht werden, vorteilhaft auch dann, wenn im momentanen Betrieb auch weniger Wasser abgeschieden werden kann, als vom Mindestfluss vorgegeben. Da das Wasserreservoir stets ausreichend gefüllt ist, kann auch bei solchen niedrigen Abscheidungsmengen ein Mindestwasserfluss bereitgestellt werden.

Mit der Dosiereinrichtung kann eine vorbestimmte Menge an Wasser zu einer vorbestimmten Zeit oder Zeitdauer in die Durchflussrichtung eingeströmt werden.

Es kann somit ein passives Kühlkonzept für die Gebläsevorrichtung realisiert werden, indem das freie Prozesswasser gezielt zur internen Kühlung der Gebläsevorrichtung genutzt werden kann. Damit soll das gesamte Temperaturniveau der Gebläsevorrichtung gesenkt werden, indem ein Teil der Abwärme durch das durchströmende bzw. in der Gebläsevorrichtung abgeschiedene Prozesswasser aufgenommen und abgeführt wird.

Vorteilhaft kann dabei auf aktive Kühlkonzepte oder alternative Maßnahmen verzichtet werden und Kosten und Bauraum gespart werden. Bei einem Regime mit hoher Wasserabscheidungmöglichkeit kann das abgeschiedene Prozesswasser aus dem Wasserabscheider des Anoden-Submoduls in einem größeren Behälter/Reservoir (größer als üblich verbaut) gesammelt werden und es kann dadurch gezielt eine Wasserzufuhr von beispielsweise 0,2 g/s (oder ein anderer vorbestimmter Wertebereich oder Wert) in den Zulauf der Gebläsevorrichtung eingebracht werden, damit diese gezielt gekühlt werden kann.

Gemäß einer bevorzugten Ausführungsform der Brennstoffzelleneinrichtung ist die Wasserstoffzufuhrleitung mit der Rezirkulationsleitung verbunden.

Gemäß einer bevorzugten Ausführungsform der Brennstoffzelleneinrichtung ist der Wasserabscheider in die Gebläsevorrichtung integriert.

Es kann der Wasserabscheider der Gebläsevorrichtung vorgelagert sein oder dieser oder ein weiterer Wasserabscheider in die Gebläsevorrichtung integriert sein.

Die Gebläsevorrichtung kann des Weiteren einen internen (weiteren) Wasserabscheider aufweisen.

Gemäß einer bevorzugten Ausführungsform der Brennstoffzelleneinrichtung fasst das Wasserreservoir ein vorbestimmtes Mindestvolumen an Wasser.

Das Wasserreservoir kann in Relation zu bekannten Wasserstoffrückläufen ein größeres Wasserreservoir sein, welches mit einer vorbestimmten Wassermenge gefüllt werden kann, insbesondere aus dem Wasserabscheider (dem vorgelagerten Wasserabscheider zur Gebläsevorrichtung und/oder dem internen Wasserabscheider).

Gemäß einer bevorzugten Ausführungsform der Brennstoffzelleneinrichtung ist die Dosiereinrichtung an einem Einlass der Gebläsevorrichtung montiert, um einen Wasserstoffrückfluss in der Rezirkulationsleitung mit einer vorbestimmten Wassermenge pro Zeiteinheit zu beladen.

Gemäß einer bevorzugten Ausführungsform der Brennstoffzelleneinrichtung umfasst die Dosiereinrichtung eine Venturi-Düse oder eine Dosierpumpe oder eine Tropfdüse.

Gemäß einer bevorzugten Ausführungsform der Brennstoffzelleneinrichtung beträgt die vorbestimmte Wassermenge zumindest, kleiner oder gleich 0,2 g/s und ist konstant über einen Betrieb der Brennstoffzelle bereitstellbar.

Hierbei ist die Angabe "konstant" innerhalb einer vorbestimmten Toleranz einer Wertschwankung akzeptabel und möglich.

Gemäß einer bevorzugten Ausführungsform der Brennstoffzelleneinrichtung ist die Dosiereinrichtung über eine erste Zuleitung mit dem Wasserreservoir verbunden und über eine zweite Zuleitung mit dem Wasserabscheider verbunden.

Erfindungsgemäß erfolgt bei dem Verfahren zum Betreiben einer Brennstoffzelleneinrichtung für ein Fahrzeug ein Bereitstellen S1 einer erfindungsgemäßen Brennstoffzelleneinrichtung; ein Ermitteln S2 eine Lastbereichs eines Betriebs der Brennstoffzelle und Rückschließen S3 auf eine vorbestimmte Wassermenge in der Rezirkulationsleitung für eine vorbestimmte Kühlwirkung auf die Gebläsevorrichtung entsprechend dem ermittelten Lastbereich; ein Einbringen S4 der vorbestimmten Wassermenge in die Rezirkulationsleitung durch die Dosiereinrichtung und Erzeugen S5 der vorbestimmten Kühlwirkung auf die Gebläsevorrichtung.

Gemäß einer bevorzugten Ausführungsform des Verfahrens wird das Wasserreservoir in einem hohen Leistungsregime der Brennstoffzelle gefüllt und die vorbestimmte Wassermenge in einem niedrigen Leistungsregime der Brennstoffzelle vom Wasserreservoir entnommen, wobei das hohe Leistungsregime und das niedrige Leistungsregime gemäß einem vorbestimmten Grenzwert bestimmbar sind.

Die Brennstoffzelleneinrichtung kann sich auch durch die in Verbindung mit dem Verfahren genannten Merkmale und dessen Vorteile auszeichnen und umgekehrt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand der in den schematischen Figuren der Zeichnung angegebenen Ausführungsbeispiele näher erläutert.

Es zeigen:
- Fig. 1: ein schematisches Diagramm welches den Zusammenhang zwischen der Brennstoffzellen-Leistung und dem Gebläse-Leistungsbedarf darstellt;
- Fig. 2: eine schematische Darstellung einer Dosiervorrichtung gemäß einem Ausführungsbeispiel der vorliegenden Erfindung;
- Fig. 3: eine Blockdarstellung von Verfahrensschritten des Verfahrens zum Betreiben einer Dosiervorrichtung für einen Wasserstoffkreis für eine Brennstoffzelleneinrichtung gemäß einem Ausführungsbeispiel der vorliegenden Erfindung.

In den Figuren bezeichnen gleiche Bezugszeichen gleiche bzw. funktionsgleiche Elemente.

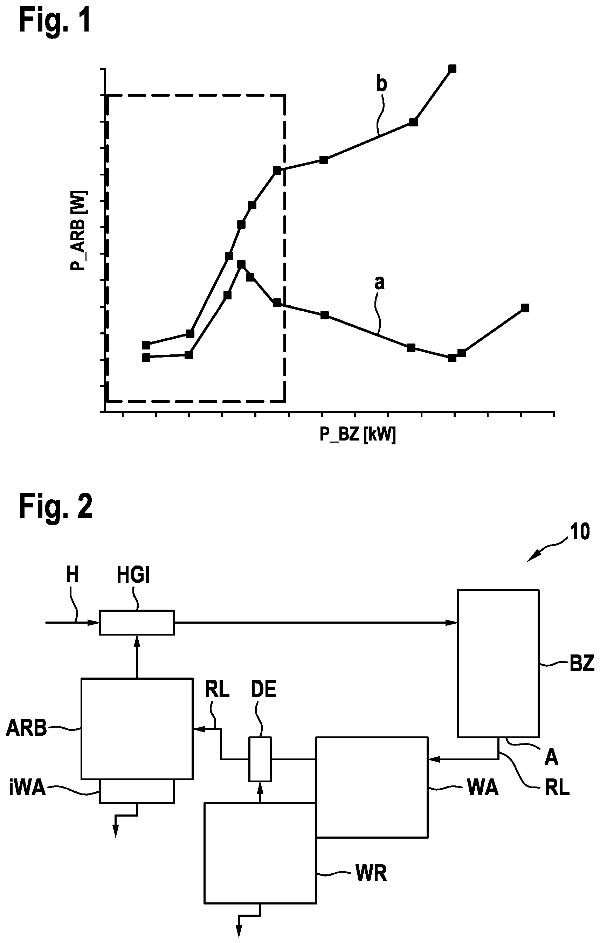

Fig. 1 zeigt ein schematisches Diagramm, welches den Zusammenhang zwischen der Brennstoffzellen-Leistung (b) und dem Gebläse-Leistungsbedarf (a) darstellt. Aufgrund der Saugstrahlpumpe im Brennstoffzellensystem liegt der maximale Leistungsbedarfs des Gebläses im Teillastbereich.

Die Fig. 1 zeigt einen Vergleich eines Betriebs einer Brennstoffzelle mit einer Jetpump (Saugstrahlpumpe) (a) und ohne eine Jetpump (b) im Rezirkulationskreis. Hierbei ist eine Leistung der Gebläsevorrichtung relativ zur Leistung der Brennstoffzelle gezeigt.

Fig. 2 zeigt eine schematische Darstellung einer Dosiervorrichtung gemäß einem Ausführungsbeispiel der vorliegenden Erfindung.

Eine Brennstoffzelleneinrichtung 10 für ein Fahrzeug umfasst eine Brennstoffzelle BZ mit einer Anodenseite A; eine Wasserstoffzufuhrleitung H, welche mit der Anodenseite A der Brennstoffzelle BZ verbunden ist; eine Rezirkulationsleitung RL mit einer Gebläsevorrichtung ARB, welche an der Anodenseite A der Brennstoffzelle BZ angebracht ist und mit der Anodenseite A verbunden ist und dazu eingerichtet ist, einen Restgehalt an Wasserstoff in einem Wasserstoffrückfluss von der Anodenseite zu dieser zurück zu zirkulieren; einen Wasserabscheider WA, welcher mit der Rezirkulationsleitung RL verbunden ist und welcher dazu eingerichtet ist, Wasser aus dem Wasserstoffrückfluss von der Anodenseite A herauszuleiten; ein Wasserreservoir WR, welches mit dem Wasserabscheider WA verbunden ist und dazu eingerichtet ist, das Wasser vom Wasserabscheider WA aufzunehmen; eine Dosiereinrichtung DE, welche mit dem Wasserreservoir WR und mit der Rezirkulationsleitung RL verbunden ist und dazu eingerichtet ist, eine vorbestimmte Wassermenge aus dem Wasserreservoir WR in die Rezirkulationsleitung RL und zur Gebläsevorrichtung ARB einzubringen.

Die Wasserstoffzufuhrleitung H kann mit der Rezirkulationsleitung RL verbunden sein. Des Weiteren kann ein interner Wasserabscheider iWA in der Gebläsevorrichtung ARB integriert sein. Vorteilhaft können beide Wasserabscheider das Wasser aus dem Prozessgas an das Wasserreservoir und einen Überschuss an ein Drain-Ventil abgeben. Das Wasserreservoir WR kann vorteilhaft ein vorbestimmtes Mindestvolumen an Wasser fassen und bei einem Betrieb auch bis dahin, oder bis zu einem Mindestfüllgrad, gefüllt sein, aus welchem der vorbestimmte Mindestwasserfluss bereitgestellt werden kann. Die Dosiereinrichtung DE kann an einem Einlass der Gebläsevorrichtung ARB abgeordnet sein, um einen Wasserstoffrückfluss in der Rezirkulationsleitung RL mit einer vorbestimmten Wassermenge pro Zeiteinheit zu beladen. Dadurch kann ein Rezirkulationsgasgemisch mit Wasser im Einlass der Gebläsevorrichtung versehen werden. Es kann die Gebläsevorrichtung mit integriertem Wasserabscheider iWA zur Sicherstellung der Anforderung an freies Wassers (Menge) am Zulaufstutzen der Brennstoffzelle erzielt werden.

Somit kann über einen weiten Betriebsbereich der Brennstoffzelle, insbesondere jedoch im niedrigen bis mittleren Lastbereich, eine im Wesentlichen konstant niedrige Wasserzufuhr zur Gebläsevorrichtung ARB erzeugt werden, um diesen damit zu kühlen.

Es kann meist erst für höhere Stack-Leistungen (Stack als Brennstoffzellenstapel, falls diese derart ausgeformt ist) ein genügend hoher Wassermassenstrom zur Verfügung stehen (0,2 g/s ab ca. 100 A entspricht etwa einer Stack-Leistung von ca. 35 kW bei einer Zellspannung von 0,8 V und 419 Zellen). Der Betriebspunkt für die Gebläsevorrichtung mit dem größten Leistungsbedarf (hohe thermische Last) entspricht etwa einer Stack-Leistung von 40 kW.

Das Wasserreservoir WR kann dafür als Wasserspeicher dienen, der bei höheren Stack-Leistungen gefüllt wird und bei dem zur Kühlung der Gebläsevorrichtung ARBs im niedrigen Stack-Lastbereich Wasser entnommen wird. Die Zufuhr des Wassers aus dem Reservoir in den Zulauf der Gebläsevorrichtung ARB zur internen Kühlung kann z.B. über eine Venturi-Düse (Strahlpumpe) die das Rezirkulationsgas als Treibstrom verwendet erfolgen, und/oder über eine Tropfdüse im ARB-Zulauf, wenn sich das Reservoir oberhalb des ARB-Einlaufstutzen befindet und/oder über eine kleine Dosierpumpe.

Im Wasserstoffzulauf H kann ein Wasserstoffinjektor HGI und Saugstrahlpumpe SSG vorhanden sein.

Mit anderen Worten kann das anfallende Wasser der Brennstoffzelle über den Wasserabscheider des Anoden-Submoduls abgeschiedenen und im WasserReservoir gesammelt werden. Im Idealfall ist der Abscheidegrad des Wasserabscheiders sehr hoch, damit das Gas nahezu frei von Wasser ist und nachfolgend, gezielt mit einer zur Kühlung des ARBs notwendigen Wassermenge, beladen werden kann.

Über die Dosiereinrichtung (z.B. in Form einer Venturi-Düse) kann dem Gas im ARB-Einlass eine geringe oder zumindest vorbestimmte Wassermenge zur Kühlung zugeführt werden. Das Wasser kann anschließend einen Teil der Abwärme im ARB aufnehmen und durch den Auslass abgeführt oder durch den integrierten Wasserabscheider im ARB abgeschieden werden.

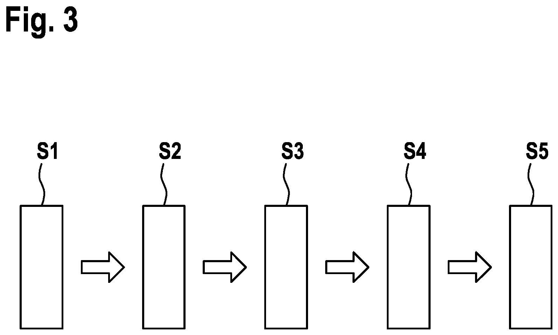

Fig. 3 zeigt eine Blockdarstellung von Verfahrensschritten des Verfahrens zum Betreiben einer Brennstoffzelleneinrichtung gemäß einem Ausführungsbeispiel der vorliegenden Erfindung.

Bei dem Verfahren erfolgt ein Bereitstellen S1 einer erfindungsgemäßen Brennstoffzelleneinrichtung; ein Ermitteln S2 eine Lastbereichs eines Betriebs der Brennstoffzelle und Rückschließen S3 auf eine vorbestimmte Wassermenge in der Rezirkulationsleitung für eine vorbestimmte Kühlwirkung auf die Gebläsevorrichtung entsprechend dem ermittelten Lastbereich; ein Einbringen S4 der vorbestimmten Wassermenge in die Rezirkulationsleitung durch die Dosiereinrichtung und Erzeugen S5 der vorbestimmten Kühlwirkung auf die Gebläsevorrichtung.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

## Patentansprüche

1. Brennstoffzelleneinrichtung (10) für ein Fahrzeug (F), umfassend:
- eine Brennstoffzelle (BZ) mit einer Anodenseite (A) und einer Kathodenseite (K);
- eine Wasserstoffzufuhrleitung (H), welche mit der Anodenseite (A) der Brennstoffzelle (BZ) verbunden ist;
- eine Rezirkulationsleitung (RL) mit einer Gebläsevorrichtung (ARB), welche an der Anodenseite (A) der Brennstoffzelle (BZ) angebracht ist und mit der Anodenseite (A) verbunden ist und dazu eingerichtet ist, einen Restgehalt an Wasserstoff in einem Wasserstoffrückfluss von der Anodenseite zu dieser zurück zu zirkulieren;
- einen Wasserabscheider (WA), welcher mit der Rezirkulationsleitung (RL) verbunden ist und welcher dazu eingerichtet ist, Wasser aus dem Wasserstoffrückfluss von der Anodenseite (A) herauszuleiten;
- ein Wasserreservoir (WR), welches mit dem Wasserabscheider (WA) verbunden ist und dazu eingerichtet ist, das Wasser vom Wasserabscheider (WA) aufzunehmen;
- eine Dosiereinrichtung (DE), welche mit dem Wasserreservoir (WR) und mit der Rezirkulationsleitung (RL) verbunden ist und dazu eingerichtet ist, eine vorbestimmte Wassermenge aus dem Wasserreservoir (WR) in die Rezirkulationsleitung (RL) und zur Gebläsevorrichtung (ARB) einzubringen.

2. Brennstoffzelleneinrichtung (10) nach Anspruch 1, bei welcher die Wasserstoffzufuhrleitung (H) mit der Rezirkulationsleitung (RL) verbunden ist.

3. Brennstoffzelleneinrichtung (10) nach Anspruch 1 oder 2, bei welcher der Wasserabscheider (WA) in die Gebläsevorrichtung (ARB) integriert ist.

4. Brennstoffzelleneinrichtung (10) nach einem der Ansprüche 1 bis 3, bei welcher das Wasserreservoir (WR) ein vorbestimmtes Mindestvolumen an Wasser fasst.

5. Brennstoffzelleneinrichtung (10) nach einem der Ansprüche 1 bis 4, bei welcher die Dosiereinrichtung (DE) an einem Einlass der Gebläsevorrichtung (ARB) montiert ist, um einen Wasserstoffrückfluss in der Rezirkulationsleitung (RL) mit einer vorbestimmten Wassermenge pro Zeiteinheit zu beladen.

6. Brennstoffzelleneinrichtung (10) nach einem der Ansprüche 1 bis 5, bei welcher die Dosiereinrichtung (DE) eine Venturi-Düse oder eine Dosierpumpe oder eine Tropfdüse umfasst.

7. Brennstoffzelleneinrichtung (10) nach einem der Ansprüche 1 bis 6, bei welcher die vorbestimmte Wassermenge zumindest, kleiner oder gleich 0,2 g/s beträgt und konstant über einen Betrieb der Brennstoffzelle (BZ) bereitstellbar ist.

8. Brennstoffzelleneinrichtung (10) nach einem der Ansprüche 1 bis 7, bei welcher die Dosiereinrichtung (DE) über eine erste Zuleitung mit dem Wasserreservoir (WR) verbunden ist und über eine zweite Zuleitung mit dem Wasserabscheider (WA) verbunden ist.

9. Verfahren zum Betreiben einer Brennstoffzelleneinrichtung (10) für ein Fahrzeug (F) umfassend die Schritte:
- Bereitstellen (S1) einer Brennstoffzelleneinrichtung (10) nach einem der Ansprüche 1 bis 8;
- Ermitteln (S2) eine Lastbereichs eines Betriebs der Brennstoffzelle (BZ) und Rückschließen (S3) auf eine vorbestimmte Wassermenge in der Rezirkulationsleitung (RL) für eine vorbestimmte Kühlwirkung auf die Gebläsevorrichtung (ARB) entsprechend dem ermittelten Lastbereich;
- Einbringen (S4) der vorbestimmten Wassermenge in die Rezirkulationsleitung (RL) durch die Dosiereinrichtung (DE) und Erzeugen (S5) der vorbestimmten Kühlwirkung auf die Gebläsevorrichtung (ARB).

10. Verfahren nach Anspruch 9, bei welchem das Wasserreservoir (WR) in einem hohen Leistungsregime der Brennstoffzelle (Z) gefüllt wird und die vorbestimmte Wassermenge in einem niedrigen Leistungsregime der Brennstoffzelle (Z) vom Wasserreservoir (WR) entnommen wird, wobei das hohe Leistungsregime und das niedrige Leistungsregime gemäß einem vorbestimmten Grenzwert bestimmbar sind.

## Claims

1. Fuel cell device (10) for a vehicle (F), comprising:
- a fuel cell (BZ) with an anode side (A) and a cathode side (K);
- a hydrogen supply line (H) connected to the anode side (A) of the fuel cell (BZ);
- a recirculation line (RL) with a blower device (ARB) attached to the anode side (A) of the fuel cell (BZ), connected to the anode side (A), and designed to circulate a residual hydrogen content in a hydrogen backflow from the anode side back to the anode side;
- a water separator (WA) connected to the recirculation line (RL) and designed to discharge water from the hydrogen backflow from the anode side (A);
- a water reservoir (WR) connected to the water separator (WA) and designed to receive the water from the water separator (WA);
- a metering device (DE) connected to the water reservoir (WR) and to the recirculation line (RL) and designed to introduce a predetermined quantity of water from the water reservoir (WR) into the recirculation line (RL) and to the blower device (ARB).

2. Fuel cell device (10) according to Claim 1, in which the hydrogen supply line (H) is connected to the recirculation line (RL).

3. Fuel cell device (10) according to Claim 1 or 2, in which the water separator (WA) is integrated into the blower device (ARB).

4. Fuel cell device (10) according to any one of Claims 1 to 3, in which the water reservoir (WR) holds a predetermined minimum volume of water.

5. Fuel cell device (10) according to any one of Claims 1 to 4, wherein the metering device (DE) is mounted on an inlet of the blower device (ARB) in order to load a hydrogen backflow in the recirculation line (RL) with a predetermined quantity of water per unit time.

6. Fuel cell device (10) according to any one of Claims 1 to 5, wherein the metering device (DE) comprises a Venturi nozzle or a metering pump or a drop nozzle.

7. Fuel cell device (10) according to any one of Claims 1 to 6, in which the predetermined quantity of water is at least, less than or equal to 0.2 g/s and can be provided constantly throughout operation of the fuel cell (BZ).

8. Fuel cell device (10) according to any one of Claims 1 to 7, in which the metering device (DE) is connected to the water reservoir (WR) via a first supply line and is connected to the water separator (WA) via a second supply line.

9. Method for operating a fuel cell device (10) for a vehicle (F), comprising the steps:
- providing (S1) a fuel cell device (10) according to any one of Claims 1 to 8;
- determining (S2) a load range of operation of the fuel cell (BZ), and extrapolating (S3) a predetermined quantity of water in the recirculation line (RL) for a predetermined cooling effect on the blower device (ARB) in a manner corresponding to the determined load range;
- introducing (S4) the predetermined quantity of water into the recirculation line (RL) by the metering device (DE), and generating (S5) the predetermined cooling effect on the blower device (ARB).

10. Method according to Claim 9, in which the water reservoir (WR) is filled in a high performance regime of the fuel cell (Z) and the predetermined amount of water in a low performance regime of the fuel cell (Z) is taken from the water reservoir (WR), wherein the high performance regime and the low performance regime can be determined according to a predetermined limit value.

## Revendications

1. Dispositif de pile à combustible (10) pour un véhicule (F), comprenant :
- une pile à combustible (BZ) ayant un côté anode (A) et un côté cathode (K) ;
- une conduite d'amenée d'hydrogène (H) reliée au côté anode (A) de la pile à combustible (BZ) ;
- une conduite de recirculation (RL) avec un dispositif de soufflante (ARB), qui est monté du côté anode (A) de la pile à combustible (BZ) et est relié au côté anode (A) et qui est configuré pour recirculer une teneur résiduelle en hydrogène dans un reflux d'hydrogène depuis le côté anode vers celui-ci ;
- un séparateur d'eau (WA), qui est relié à la conduite de recirculation (RL) et qui est configuré pour évacuer de l'eau hors du reflux d'hydrogène depuis le côté anode (A) ;
- un réservoir d'eau (WR), qui est relié au séparateur d'eau (WA) et qui est configuré pour recevoir l'eau provenant du séparateur d'eau (WA) ;
- un dispositif de dosage (DE), qui est relié au réservoir d'eau (WR) et à la conduite de recirculation (RL) et qui est configuré pour introduire une quantité d'eau prédéterminée depuis le réservoir d'eau (WR) dans la conduite de recirculation (RL) et vers le dispositif de soufflante (ARB).

2. Dispositif de pile à combustible (10) selon la revendication 1, dans lequel la conduite d'amenée d'hydrogène (H) est reliée à la conduite de recirculation (RL).

3. Dispositif de pile à combustible (10) selon la revendication 1 ou 2, dans lequel le séparateur d'eau (WA) est intégré dans le dispositif de soufflante (ARB).

4. Dispositif de pile à combustible (10) selon l'une quelconque des revendications 1 à 3, dans lequel le réservoir d'eau (WR) contient un volume minimal prédéterminé d'eau.

5. Dispositif de pile à combustible (10) selon l'une quelconque des revendications 1 à 4, dans lequel le dispositif de dosage (DE) est monté à une entrée du dispositif de soufflante (ARB) afin de charger un reflux d'hydrogène dans la conduite de recirculation (RL) avec une quantité d'eau prédéterminée par unité de temps.

6. Dispositif de pile à combustible (10) selon l'une quelconque des revendications 1 à 5, dans lequel le dispositif de dosage (DE) comprend une buse Venturi ou une pompe de dosage ou une buse de gouttage.

7. Dispositif de pile à combustible (10) selon l'une quelconque des revendications 1 à 6, dans lequel la quantité d'eau prédéterminée est au moins, inférieure ou égale à 0,2 g/s et peut être fournie de manière constante pendant un fonctionnement de la pile à combustible (BZ).

8. Dispositif de pile à combustible (10) selon l'une quelconque des revendications 1 à 7, dans lequel le dispositif de dosage (DE) est relié au réservoir d'eau (WR) via une première conduite d'alimentation et est relié au séparateur d'eau (WA) via une deuxième conduite d'alimentation.

9. Procédé pour faire fonctionner un dispositif de pile à combustible (10) pour un véhicule (F), comprenant les étapes :
- la fourniture (S1) d'un dispositif de pile à combustible (10) selon l'une quelconque des revendications 1 à 8 ;
- la détermination (S2) d'une plage de charge d'un fonctionnement de la pile à combustible (BZ) et la déduction (S3) d'une quantité d'eau prédéterminée dans la conduite de recirculation (RL) pour un effet de refroidissement prédéterminé sur le dispositif de soufflante (ARB) en fonction de la plage de charge déterminée ;
- l'introduction (S4) de la quantité d'eau prédéterminée dans la conduite de recirculation (RL) par le dispositif de dosage (DE) et la génération (S5) de l'effet de refroidissement prédéterminé sur le dispositif de soufflante (ARB).

10. Procédé selon la revendication 9, dans lequel le réservoir d'eau (WR) est rempli dans un régime de puissance élevé de la pile à combustible (Z) et la quantité d'eau prédéterminée est prélevée du réservoir d'eau (WR) dans un régime de puissance faible de la pile à combustible (Z), le régime de puissance élevé et le régime de puissance faible étant déterminables conformément à une valeur limite prédéterminée.
